# EUROPEAN PATENT APPLICATION

(11) **EP 2 019 467 A1**
(43) Date of publication of application: **28.01.2009**
(21) Application number: 07112916.7
(22) Date of filing: 23.07.2007
(51) Int. Cl.: H02J 3/14

(54) **Automated Load Balancing for distribution substation feeders**

(71) Applicant: K.N. Toosi University of Technology, Teheran (IR)
(72) Inventor: Tavakoli Bina, Mohammad, 16315-1355, TEHERAN (IR); Mojibian, Mohammad Jafar, P.O. Box 16315, TEHERAN (IR)
(74) Representative: P&TS Patents & Technology Surveys SA

(57) **Abstract**

An automated load-balancing manoeuvring device (ALBM) connected in series with the low-voltage side of a distribution transformer for an electrical substation is disclosed. The ALBM comprises (N-1) matrix converters (101) for N feeders branched out of the main bus (203) at Y-winding of distribution transformer (100). A central processor (301) analyses a combinatorial optimization problem using the sensing currents of all feeders. This analysis provides a selective swap between heavily loaded phases and lightly loaded ones. Phase swap solutions are executed by microcontrollers (105) assigned to each matrix converter, which are responsible for proper driving of the switches. The ALBM dissipates low energy losses because the switching frequency can be desirably low depending on the dynamics of the load.

## Description

### Field of the invention

The present invention relates to the automated load-balancing manoeuvring (ALBM) in distribution substations. More particularly, the present invention introduces an intelligent device that automatically performs appropriate phase-swaps between the heavily loaded phases to the lightly loaded ones for all feeders. This process balances the three-phase currents flowing through Y-winding of the distribution transformer in the substation.

### Description of related art

Distribution substations comprise a three-phase Δ-Y transformer connected to the main bus that supply a number of three-phase feeders. Each feeder supplies single-phase as well as three-phase loads. Single-phase loads are connected between one phase and the fourth wire (or the neutral wire), leading to a probable overloading of a particular phase. This would need the transformer, cables and wires to be resized to avoid destruction of various electrical equipments. It is noticeable that the total load power can be still well below the nominal ratings of the distribution transformer. Nevertheless, proper resizing of transformers and cables imposes additional cost to the system; but, unused capacity in the lightly loaded phases of the distribution transformer cannot be utilized by the supplier.

Moreover, the lightly loaded phases provide bigger supplying voltage for their consumers compared to that of the heavily loaded phase, worsening the power quality parameters both for the distributors and the consumers. Further, negative and zero sequence components distress electrical equipments, often in the form of increased energy losses, noise and excessive heat within the three-phase windings.

Meanwhile, compensation of an unbalanced bus is complicated in practice; a balanced three-phase system is decidedly desirable though. Load balancing manoeuvring usually takes place manually by transferring heavily loaded feeders to the lightly loaded ones. This has to be carried out in order to achieve a better symmetry in the equivalent three-phase load seen from the main bus within the distribution substations. Nevertheless, the problem is which loads should be transferred to which feeders and phases when this is arranged by experienced personnel. Under peak-load conditions, however, loads are regularly switched on and off to get a balanced or nearly balanced system. This situation can readily deteriorate the unbalanced conditions under normal loads because certain loads are on and some others are off.

Several solutions have been presented to overcome the unbalanced conditions caused by the unsymmetrical load in addition to the network reconfiguration that is suggested conventionally for distribution systems. The most common power system solutions are based on tap-changing transformers, where the tap is changed on-line under the load varying conditions. This would change the effective turn ratio, which changes the voltage and current. This can help to manage the needed peak load up to the nominal ratings of the tap-changing transformer. However, there are certain drawbacks related to this method; first, the design of such transformer is complicated. Second, mechanical means of tap-changing practically impose considerable extra maintenance requirement and cost; even electronic means of tap-changing cannot be applied in distribution systems. Third, the transformer itself experiences additional stress due to the tap-changing that reduces its effective operation duration.

Furthermore, a passive compensation method is made up of certain susceptibility shunted across the load in order to balance three-phase source-end currents. These susceptibilities are depending to the load admittances, while no external energy sources are needed. Nevertheless, the suggested passive solution operates perfectly as long as the load-terminal voltages are balanced. This assumption is unrealistic because the source equivalent impedance is nonzero; thus, negative sequence voltages can contribute to active power in correspondence with negative sequence currents.

Static compensators basically supply reactive power to the load, lowering the effective source currents. This can successfully be performed in distribution substations. They are also suggested in literatures in order to balance the source-end currents. However, the proposed control algorithms have been influenced by the unbalanced applied voltages, resulting in practical issues both for the compensator and the distribution substation. Unbalanced applied voltages impose 100/120 Hz oscillations on top of the DC voltage. This will then be modulated by the DC/AC converter into the AC-side, which generates harmonic currents through the commutation inductance to the distribution substation. As a result, the unbalanced conditions are not improved properly despite many suggested filters to absorb the oscillations.

US5604385 describes a load balancing apparatus for a three-phase current system having an array of switches and current sensors. When the current on any of the supplying single phase loads exceeds a fixed percentage of an upper current limit sensing, a reinforced wiring takes place. This solution does not provide an optimal load balancing though, but only reacts when a boundary value is reached. Moreover, this solution is meant for end customers, since all branches supply single phase loads. It would not be suited for distribution substations, because unbalanced conditions that could occur would be unacceptable at the distribution transformer level because of the power losses, heat, mechanical stresses and noise.

US5734586 describes a load balancing method where sectionalizing switches on the 20kV side of a network are turned on and off to achieve to achieve a steady state through a combinatorial optimisation approach for power loss minimization and reactive power computation. This solution is yet not replicable to distribution transformers (e.g. 20kV/400V). Indeed, any load-balancing in high-voltage distribution network has no effect on zero current sequence currents, i.e. the current flows through the neutral wire corresponding to the sum of the three identical in-phase currents, of Δ-Y transformer's windings generated by low-voltage loads. Only balancing in low voltage side can achieve those zero sequence currents from both winding of a Δ-Y transformer.

### Brief summary of the invention

There is hence a need for an improved load-balancing method and apparatus overcoming the cited drawbacks of the state of the art.

According to the invention, these aims are achieved by means of a method for automated load-balancing manoeuvring in a three-phase distribution substation, comprising a step of sampling three-phase feeders with current sensors on a main bus and the analysis and resolution of a combinatorial minimization problem in order to significantly lower current unbalance of a distribution transformer on a control unit. Currents of three-phase feeders are then swapped through a matrix converter driving appropriate switching states.

According to the invention, these objectives are also achieved by means of an automated load—balancing manoeuvring (ALBM) power circuit device for a power distribution substation located behind a Δ-Y transformer (Δ-winding: high voltage (e.g. 20 kV) and Y-winding: low-voltage (e.g. 400V)). Such a power circuit, meant to perform the inventive method according to the invention, comprises a low-voltage three-phase main bus connected to the Y-winding of the transformer; a number of low-voltage three-phase feeders that are connected to the main bus and supply electrical power to single-phase as well as three-phase loads; and the automated load-balancing manoeuvring (ALBM) device that is series-connected between the main bus and load, the ALBM including a number of matrix converters, a number of control units and a central intelligent unit, and a number of current transformers and/or sensors, each current transformer and/or sensor sensing current flowing through all incoming and outgoing branches from the main bus, a central microcontroller uploaded with an intelligent program, in response to the current sensors, deciding for all feeders the required phase-swaps to be performed by matrix converters.

Advantageous embodiments are described in the dependent claims.

### Brief Description of the Drawings

The invention will be better understood with the aid of the description of the embodiment given by way of example and illustrated by the figures, in which:
Fig. 1 shows a Δ-Y distribution transformer supplying a main three-phase bus in which N feeders are branched out;
Fig. 2 shows the detail of a so-called matrix converter;
Fig. 3 shows smooth change in both voltages and currents of the load, when a phase swap has taken place and when the two phase voltages are identical;
Fig. 4 shows all three phases are swapped simultaneously by the matrix converter; once at t = 0.175 Sec., and repeated at t=0.2 Sec;
Fig. 5 shows the operation of the prototype under severe unbalanced condition before operation of the ALBM, and after consecutive operation of the ALBM towards balancing the transformer currents;
Fig. 6 shows the significant reduction of the neutral-wire current after operation of the ALBM.

### Detailed Description of possible embodiments of the Invention

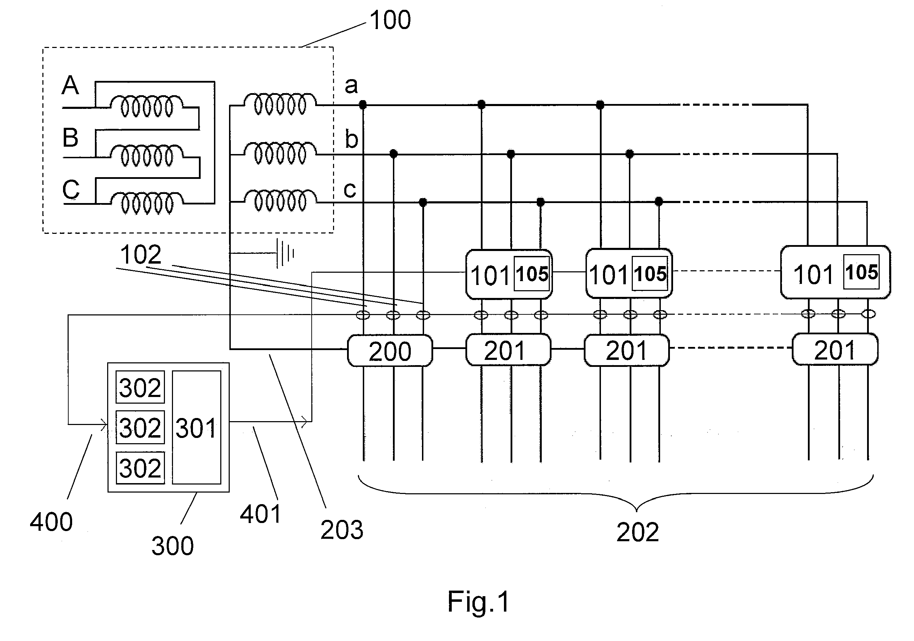

The illustrations of the present invention are given for the sake of clarity but should not be considered as limitative. Other embodiments of the invention will readily suggest themselves to persons skilled in the art. Referring first to Fig. 1, a general view is shown of an illustrative embodiment of the present invention, in which a Δ-Y distribution transformer 100 is supplying feeders 200,201. The three phase currents on the Δ side of the transformer are referred to as A, B, C, whereas the three phase currents on the Y side of the transformer are referred to as a, b, c. The Y side of the transformer is further connected to the ground. Each feeder 201, except the first feeder 200, is entered as three-phase AC input to an AC-AC matrix converter 101; the switching converter can swap the connecting paths from the input phases to the three-phase loads 202 from the feeders. The number of matrix converters 101 corresponds to the number of feeders 201, while first feeder 200 serves as reference. Since there are three phases, there are hence 3!, i.e. six possible swapping options that need to be selected.

Therefore, for N feeders, (N-1) matrix converters 101 are able to provide 6^{(N-1)} possible path interconnections between the main bus 203 and the loads 202. One path interconnection, however, introduces the lowest unbalance factor for the source currents a, b, c. To find this desired path interconnection, three-phase currents of all feeders 200,201 are sampled on the main bus 203 by using sensing devices 102, e.g. current transformers, or Hall effect transducers. According to a preferred embodiment, a microcontroller 302 located in a control unit 300 is assigned to each feeder 201, where three-phase sampled currents are then digitized using A/D, and applied to the microcontroller 302 of the corresponding feeder 201. These signals are then processed by the microcontroller 302, and the real measured values are transmitted to the central digital signal processor 301 of the control unit 300. The control unit 300 is coupled to the sensing devices 102 through the link 400, and has also a feedback loop 401 on the matrix converters. The goal of the control unit 300 is to analyze and solve a combinatorial optimisation problem in order to significantly lower the current unbalance.

The bigger the number of feeders, the possible interconnection options increases, hence, a central processor 301 selects the best interconnecting path. The objective function can be set to minimize the energy losses due to the three-phase currents of secondary Y side of distribution transformer 100. The processor can be chosen based on the required analytical and storage space. Also, the algorithm of finding the best interconnecting solution can be managed using a direct search for small N or a heuristic search such as genetic algorithm for big N.

The central processor 301 processes the inputs of said sensing devices 102. When a new interconnecting path for each feeder 201 is found, this has to be put into practice by the corresponding matrix converter 101. Each matrix converter 101 has therefore a microcontroller 105 that receives commands of changing the interconnection path from the central processor 301 in the form of switching states over the feedback loop 401.

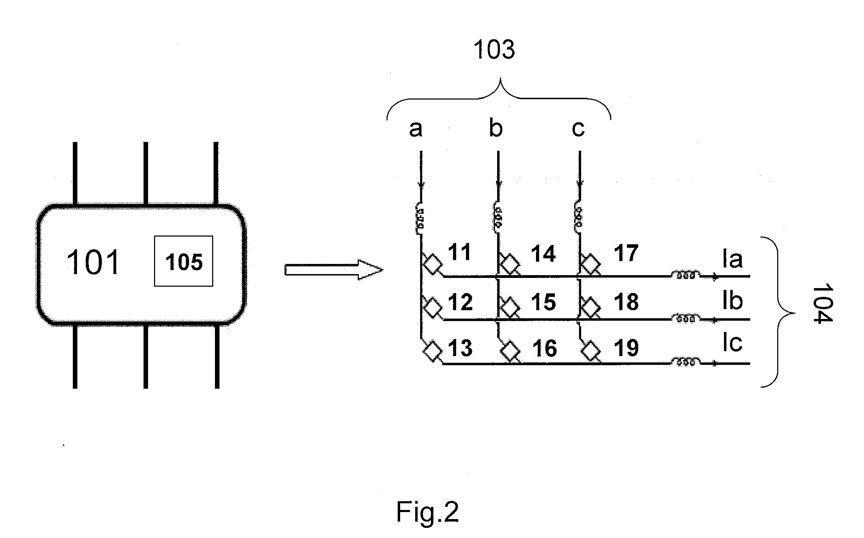

Fig.2 illustrates the logical functioning of the matrix converter 101. The input 103 for the matrix converter are the three phase currents a, b, c of the Y side of the transformer. The outputs 104 are the currents la, lb, lc. In a preferred embodiment of the invention, the matrix converters 101 comprises "four quadrant" switches, realized as a combination of various available controlled "two-quadrant" switch types such as SCR (silicon-controlled rectifier), IGBT (insular gate bipolar transistor) and MOSFETs (Metal oxide semiconductor field effect transistor) together with diodes (uncontrolled switches) in order to cope with the bi-directional nature of both voltage and current. A four quadrant switch can thus, as a result, conduct either polarity of currents, and block either polarity of voltages. There can further be protective relays (not shown) for such switches, for providing an increased reliability of the power-circuit related to the load-balancing method. If one switch fails to operate, then the protective system signals the number or location of that switch both to the microcontroller for appropriate switching status and to an alarming circuit (also not shown) for the replacement of that switch.

There are nine such switches 11 to 19 which yield the 6 possibilities mentioned earlier. The microcontroller 105 is in charge of performing the phase swaps. In principle, no power losses apply to the distribution system; however switching losses can occur. Those losses are yet very small thanks to the low switching frequency.

Nevertheless, the matrix converter 101 cannot change the switching states at any arbitrary instants because changing from one path to another needs phase swaps to take place. As each three-phase feeder is supplying power to the loads 202, a phase swap operation should be done in a specified instant such that high amplitude voltage or current are avoided. This is required to keep the consumers load away from stated transients during switching transitions for two reasons; first, power quality issues matter for both the consumers and the distribution utility network. Second, the installations might be influenced by these conditions, imposing further maintenance or replacement cost. There are basically four possibilities to swap two phases for matrix converters; first, when the voltages of two phases are identical, second, when voltage of one phase crosses zero, third, when currents of two phases are identical, and fourth, when one current crosses zero. Theoretical analysis as well as experimental results confirms that the smoothest way of swapping two phases is the first possibility. The swapping of the phases at that moment of time also proves to provide very acceptable harmonic currents performance, thus eliminating the need for capacitors or other filters for removing them.

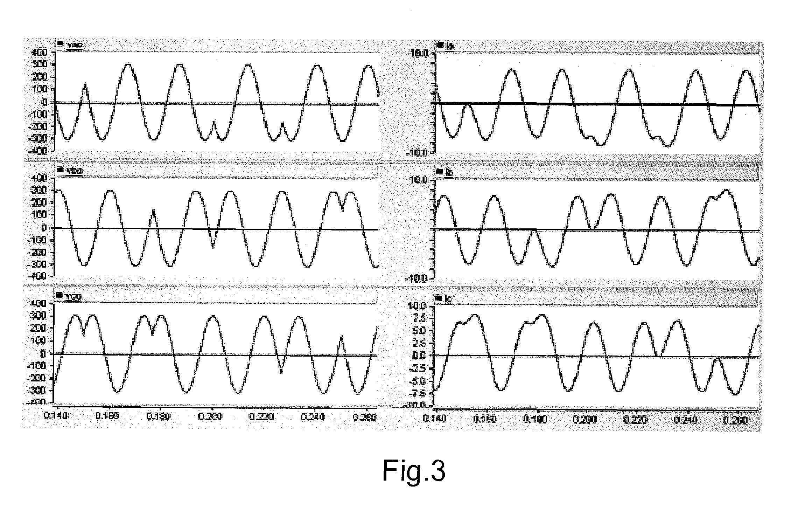

The simulation of Fig. 3 shows the smoothness of the change in both voltages and currents during a phase swap when two voltages are identical. Meanwhile, the phase swap can be managed either in the positive half-cycle or the negative one.

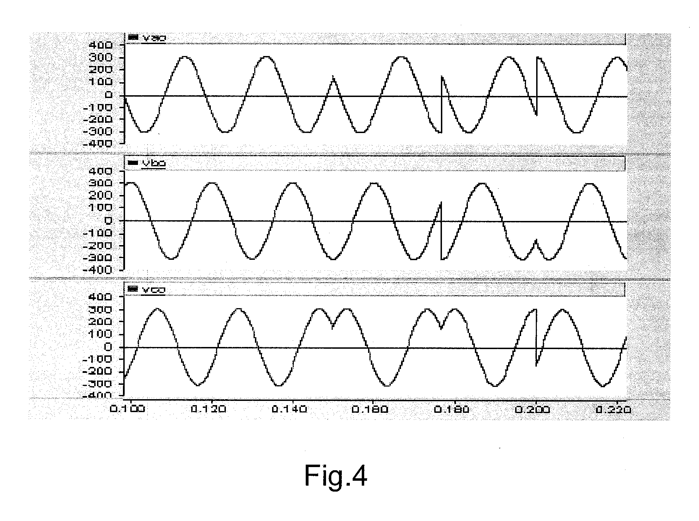

When a microcontroller 105 of a matrix converter 101 receives a command of changing interconnecting path, it will check whether this path is consist of either one or two phase swaps. Two phase swaps are required when all the three phases have to be swapped. The two phase swaps should preferably be performed sequentially rather than simultaneously in order to prevent significant discontinuous changes in voltage waveforms. A simultaneous swap of the three phases by the matrix converter is shown on Fig. 4 at t = 0.175 Sec., and repeated at t=0.2 Sec.

Rotating direction of induction motors, however, is reversed if two phases are swapped. Residential and commercial loads are often supplied by different feeders from those of industrial loads. Therefore, no phase swap is done for three-phase induction motors of industrial loads that are supplied by a separate feeder.

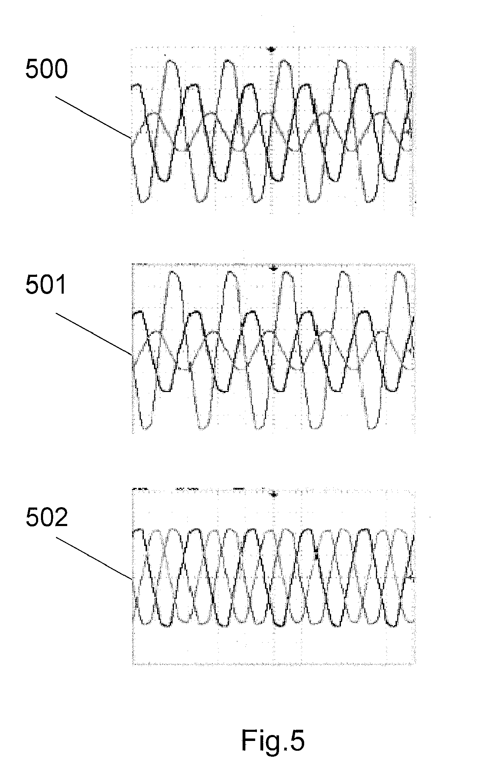

Fig. 5 shows the effects of phase swaps on severely unbalanced transformer currents (the three curves of graph 500). Then, the ALBM start operating on the feeders in two subsequent phases; one phase swap is initially performed as shown in (graph 501), and then the second phase swap is done for the feeders if needed (graph 502).

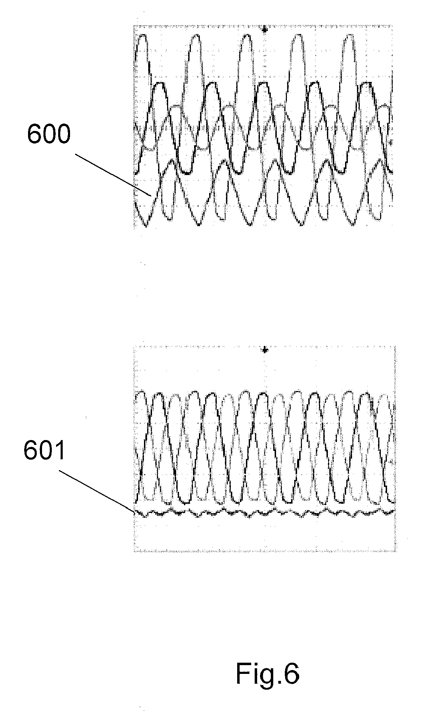

The zero sequence current is significantly lowered by the ALBM device. Fig. 6 presents the neutral-wire current (three times of the zero sequence current) that is considerably high on graph 600. The fourth-wire current after operation of the ALBM, as shown on graph 601, is nearly zero. The following advantages are achieved when the ALBM is installed at substations:
- Significant reduction in current unbalance of the secondary-side of Δ-Y transformer. Indeed, the combinatorial approach forms and solves an optimization problem; the resulting solution includes the best possible connection of the three-phase load to each feeder (i.e. which phase of the load should be connected to which phase of the feeder); thus, required phase swaps should be managed to satisfy the combinatorial approach; the matrix converter is able to manage required phase swaps; the currents of low-voltage Y-side become balanced.
- Reduction of power losses in distribution systems as well as distribution transformers. Indeed, according to a well-known electrical rule, power losses are minimized when three-phase currents are balanced. This also applies for transformer copper losses.
- Release of transformer capacity up to its nominal ratings that is limited by current unbalance. Indeed, unbalance condition reduces the actual loading capability of a distribution transformer, where the maximum current of the three phases determines the remaining capacity of transformer. In this situation, the substation transformer may not be able to supply the load as much as it is designed to and as high as the intended rate. In practice, when the maximum current reaches the overload zone, even if the other two phases operate well below their rated currents the protective alarm could turn on.
- Lowering voltage drop of consumers. Indeed, when the transformer currents are balanced by the ALBM, then the electrical impedances are evenly distributed among the three phases. Therefore, the voltage drop should always be evenly distributed for the three phases (rather than high voltage-drop for heavily loaded phase and low voltage-drop for lightly loaded phase).
- Significant reduction of audio noise of the unbalanced distribution transformer. This is achieved by the ALBM thanks to the balancing of the magnetic flux in the iron core; an experimental 20 kVA prototype also confirmed the almost complete removal of the significant audio noise of the distribution transformer.
- Reduction of thermal losses in distribution transformers and increasing their life expectancy. This is derived from the transformer windings power losses reduction. The thermal losses are further reduced through the removal of the circulating current in the Δ-winding (see the next advantage).
- Reduction in zero sequence current circulating in Δ-winding, and improving electrical as well as thermal performance of transformer. Indeed, since unbalanced loads include zero sequence currents that return from the fourth-wire (neutral-wire), the ALBM can almost eliminate the fourth-wire current, resulting in removal of this current from the Δ-winding as well.
- Preventing the distribution transformer from operating in saturated region and producing distorted waveforms. Indeed, since severe unbalanced condition may cause operation of the magnetic operating point in the saturated region due to the heavily loaded phase, the resulting distorted waveforms due to the operation of transformer in the saturation region are avoided.
- Postponement of transformer resizing due to the growth of the load because of the released capacity of transformer. Indeed, without the ALBM device and method, one phase could reach the overload region. Hence, additional loads could not be connected unless the transformer is resized. The ALBM can evenly distribute the load to the three phases of the distribution transformer by swapping from the heavily-loaded phase to the lightly-loaded ones. Thus, there would be no overloaded phase, and further connection of the load is possible in practice.

## Claims

1. A method for automated load-balancing manoeuvring in a three-phase distribution substation, comprising the following steps:
- sampling three-phase feeders (200, 201) with current sensors (102) on a main bus (203);
- analyzing and solving a combinatorial minimization problem in order to significantly lower current unbalance of a distribution transformer (100) on a control unit (300);
- swapping phases (501, 502) of three-phase feeders (201) through a matrix converter (101) driving appropriate switching states.

2. The method according to claim 1, further comprising a digitization step after said sampling step processed by microcontrollers (302) assigned to each feeder.

3. The method according to one of the preceding claims, wherein said step of analyzing and solving a combinatorial minimization problem is set to minimize energy losses based on the currents (a, b, c) flowing out of a distribution transformer (100).

4. The method according to any of the preceding claims, wherein said step of analyzing and solving a combinatorial minimization problem performs direct comparisons when the number of feeders (201) is small and uses a genetic algorithm when the number of feeders (201) is large.

5. The method according to one of the preceding claims, wherein multiple swaps are performed sequentially.

6. The method according to one of the preceding claims, wherein the phase swapping step is performed in a proper manner to prevent possible transient conditions.

7. The method according to any of the claim 6, wherein said phase swapping step between two phase loads occurs at a time when the voltages of said loads are equal.

8. An automated load-balancing manoeuvring power circuit for a distribution substation, comprising:
- matrix converters (101) for three-phase feeders (201) branched from a main bus (203) of said distribution substation, except for a first feeder (200);
- sensing devices (102) for sensing three-phase currents (202) flowing out of all branches connected to said main bus (203);
- a control unit (300) coupled to said sensing devices (400) and said matrix converters (401);
wherein
said sensing devices (102), control unit (300) and matrix converters perform the steps of the method according to any of the claims 1 to 6.

9. The power circuit of claim 8, wherein said matrix converters (101) comprise four-quadrant switches (11, 12, 13, 14, 15, 16, 17, 18, 19).

10. The power circuit of claim 8 or 9, further comprising protective relays for said four-quadrant switches (11, 12, 13, 14, 15, 16, 17, 18, 19).

11. The power circuit according to one of the claims 8 to 10, wherein said matrix converters (101) comprise a microcontroller (105) to perform six possible phase swap arrangements between the input of said matrix converter (103) and the output of said matrix converter (104).

12. The power circuit according to one of the claims 8 to 11, wherein said control unit (300) comprises a central digital processor (301) processing the inputs of said sensing devices (102) and commanding said microcontrollers (105) of said matrix converters (101).
